# FASCICULE DE BREVET EUROPEEN

(11) **EP 1 792 111 B1**
(45) Date de publication et mention de la délivrance du brevet: **30.01.2008**
(21) Numéro de dépôt: 05805803.3
(22) Date de dépôt: 22.09.2005
(51) Int. Cl.: F16K 31/04

(54) **VANNE DE REGULATION A DOUBLE SECURITE**
DOPPELSCHUTZREGELVENTIL
DOUBLE-SAFETY REGULATING VALVE

(30) Priorité: 22.09.2004 FR 0410284
(43) Date de publication de la demande: 06.06.2007
(73) Titulaire: G. Cartier Technologies, 74302 Cluses (FR)
(72) Inventeur: BOUCHANKOUK, Aziz, F-74300 Cluses (FR); CHAUMONTET, Michaël, F-74300 Cluses (FR)
(74) Mandataire: Poncet, Jean-François
(86) Numéro de dépôt international: PCT/FR2005/002345
(87) Numéro de publication internationale: WO 2006/032787

(56) Documents cités:
- EP-A- 1 106 923
- EP-A- 1 323 966
- WO-A-02/070936
- US-A1- 2002 189 693

## Description

### DOMAINE TECHNIQUE DE L'INVENTION

La présente invention concerne les dispositifs électromagnétiques de régulation de fluide à double sécurité, permettant la commande continue d'un débit de fluide dans un passage de fluide prévu dans un corps de dispositif.

De tels dispositifs peuvent être utilisés notamment pour le réglage du débit gazeux alimentant un brûleur ou une chaudière à gaz.

On connaît déjà du document WO 02/070936 un dispositif de régulation de fluide à double sécurité, comprenant une vanne de régulation et une vanne de sécurité, placées côte à côte, raccordées en série dans un passage de fluide, et logées dans un même corps de dispositif. La vanne de sécurité comprend une bobine de sécurité qui sollicite, par un circuit magnétique de sécurité, un noyau magnétique de sécurité mobile relié mécaniquement à un clapet de sécurité. L'activation de la bobine de sécurité permet la pleine ouverture du clapet de sécurité. La désactivation de la bobine de sécurité provoque le retour du clapet de sécurité à l'état de fermeture complète sous l'action d'un ressort de fermeture de sécurité. La vanne de régulation comprend un clapet de régulation, sollicité par un ressort de régulation vers sa position de fermeture complète, et relié par l'intermédiaire d'un moyen d'accouplement électromagnétique à un actionneur linéaire apte à régler sa position de façon continue selon une course linéaire entre une pleine ouverture et une fermeture complète. Le moyen d'accouplement électromagnétique comprend une bobine d'accouplement qui, lorsqu'elle est activée, sollicite, par un circuit magnétique d'accouplement relié à l'actionneur linéaire, un noyau magnétique d'accouplement mobile relié au clapet de régulation. Selon l'un des modes de réalisation de ce document, la bobine de sécurité sert également de bobine d'accouplement, le circuit magnétique de sécurité et le circuit magnétique d'accouplement étant un seul et même circuit magnétique d'excitation comprenant notamment les deux noyaux magnétiques mobiles, à savoir le noyau magnétique mobile de sécurité et le noyau magnétique mobile d'accouplement.

Lors d'une absence d'alimentation électrique de la bobine, les deux clapets de régulation et de sécurité sont repoussés par leurs ressorts respectifs vers la position de fermeture, indépendamment l'un de l'autre, assurant une double sécurité à la fermeture, le clapet de régulation se trouvant désaccouplé vis-à-vis de l'actionneur linéaire.

Un tel dispositif fonctionne correctement, mais présente l'inconvénient d'un volume relativement important, avec un circuit magnétique également volumineux et onéreux.

La bobine de sécurité doit être dimensionnée de manière suffisante pour produire une excitation magnétique capable d'attirer le noyau magnétique de sécurité même en présence d'un entrefer relativement important, afin d'ouvrir la soupape de sécurité. II en résulte une bobine ayant un volume et un coût relativement importants.

### EXPOSE DE L'INVENTION

Le problème proposé par la présente invention est de concevoir une nouvelle structure de dispositif de régulation de fluide à double sécurité qui présente un volume réduit.

Un autre but est de proposer un tel dispositif dans lequel les éléments magnétiques ont également un volume réduit, pour être produits à coût inférieur.

Un autre but de l'invention est de réduire encore le volume de la bobine d'excitation, afin d'en réduire simultanément l'encombrement et le coût de production.

Un autre but est d'assurer un isolement fiable de tous les organes électriquement conducteurs vis-à-vis du fluide à commander.

Un autre but est d'éviter la présence de connexions électriques mobiles pour l'alimentation des organes électriques du dispositif. Ainsi, la bobine doit de préférence être fixe sur le corps de dispositif.

Un autre but est de conserver une indépendance totale des clapets l'un vis-à-vis de l'autre en cas de fermeture de sécurité, pour que l'un au moins des clapets se ferme en cas de besoin même si l'autre clapet est bloqué en position ouverte ou partiellement ouverte, par exemple à cause d'un corps étranger interposé entre le clapet et le siège correspondant, ou à cause de tout autre motif.

Un autre but de l'invention est d'assurer une régulation stable du débit de fluide, en évitant des risques d'instabilité du clapet de régulation et du clapet de sécurité.

Pour atteindre ces buts ainsi que d'autres, l'invention propose un dispositif de régulation de fluide à double sécurité, comprenant une vanne de régulation et une vanne de sécurité raccordées en série dans un passage de fluide et logées dans un même corps de dispositif, la vanne de sécurité ayant une bobine d'excitation qui sollicite, par un circuit magnétique d'excitation, un noyau magnétique de sécurité mobile relié mécaniquement à un clapet de sécurité, l'activation de la bobine d'excitation permettant la pleine ouverture du clapet de sécurité, la désactivation de la bobine d'excitation provoquant le retour du clapet de sécurité à l'état de fermeture complète sous l'action d'un ressort de fermeture de sécurité, la vanne de régulation ayant un clapet de régulation sollicité par un ressort de régulation vers sa position de fermeture complète et relié par l'intermédiaire d'un moyen d'accouplement électromagnétique à un actionneur linéaire apte à régler sa position de façon continue selon une course linéaire entre une pleine ouverture et une fermeture complète, le moyen d'accouplement électromagnétique comprenant ladite bobine d'excitation qui sollicite, lorsqu'elle est activée, par ledit circuit magnétique d'excitation relié à l'actionneur linéaire, un noyau magnétique d'accouplement mobile relié au clapet de régulation, ladite bobine d'excitation et ledit circuit magnétique d'excitation participant simultanément à l'actionnement du clapet de sécurité et à l'accouplement du clapet de régulation à l'actionneur linéaire ; selon l'invention :
- le noyau magnétique de sécurité mobile et le noyau magnétique d'accouplement mobile sont un seul et même noyau magnétique mobile,
- le clapet de régulation et le clapet de sécurité sont agencés sur un axe commun de déplacement,
- le clapet de sécurité est relié mécaniquement au noyau magnétique mobile par une liaison mécanique unidirectionnelle de sécurité, assurant l'entraînement positif du clapet de sécurité dans le sens de son ouverture, tout en laissant au noyau magnétique mobile une faculté de déplacement indépendante du clapet de sécurité dans le sens de sa fermeture,
- le clapet de régulation est relié mécaniquement au noyau magnétique mobile par une liaison mécanique unidirectionnelle de régulation, assurant l'entraînement positif du clapet de régulation dans le sens de son ouverture, tout en laissant au noyau magnétique mobile une faculté de déplacement indépendante du clapet de régulation dans le sens de sa fermeture.

On comprend qu'une telle disposition réduit très sensiblement le volume de matériau magnétique nécessaire pour la constitution du circuit magnétique d'excitation commun et du seul noyau magnétique mobile.

Simultanément, par le fait que l'un et l'autre des clapets sont entraînés par le noyau magnétique mobile, et donc par l'actionneur linéaire, il n'est pas nécessaire de donner à la bobine d'excitation une puissance importante capable d'attirer à distance le noyau magnétique mobile pour ouvrir elle-même l'un ou l'autre des clapets : on peut prévoir une bobine d'excitation juste suffisante pour maintenir le collage magnétique entre le noyau magnétique mobile et le circuit magnétique d'excitation en présence d'un faible entrefer, et l'actionneur linéaire peut assurer par lui-même le rapprochement préalable du noyau magnétique mobile vis-à-vis du circuit magnétique d'excitation jusqu'à la présence d'un entrefer suffisamment faible et compatible avec la capacité d'attraction magnétique générée par la bobine d'excitation.

Une simplification de la structure du dispositif de régulation de fluide, et une réduction de son volume global, peuvent être obtenus en prévoyant que les deux clapets sont dans le même sens, c'est-à-dire que leurs fermetures respectives sont obtenues par des mouvements s'effectuant dans le même sens.

De préférence, on utilisera le dispositif en pression confirmant la fermeture, c'est-à-dire avec un sens de pression et d'écoulement de fluide qui tend à plaquer les clapets contre leur siège lorsqu'ils sont fermés.

Selon une réalisation avantageuse, le ressort de fermeture de sécurité peut être interposé entre le corps de dispositif et le clapet de sécurité.

De même, le ressort de régulation peut être interposé entre le clapet de sécurité et le clapet de régulation, réalisant une structure compacte et simple.

Selon une réalisation simple et fiable, le clapet de régulation peut être relié mécaniquement au noyau magnétique mobile par une tige axiale solidaire du noyau magnétique mobile et comportant une tête qui coulisse dans un logement axial épaulé d'un noyau axial relié au clapet de régulation, la tête pouvant coulisser axialement dans le logement axial entre son fond et l'épaulement.

De préférence, la tige axiale et le logement axial sont dimensionnés de façon que, lorsque les clapets de sécurité et de régulation sont fermés, la tête se trouve en une position axiale intermédiaire dans le logement axial, de sorte que le clapet de sécurité s'ouvre avant le clapet de régulation. De la sorte, on évite toute instabilité du clapet de sécurité pendant les étapes de régulation.

De préférence, un ressort de compression est interposé entre la tête et le fond du logement axial, pour repousser la tête et le noyau magnétique mobile à l'écart du clapet de régulation. Cela évite également les risques d'instabilité du clapet de régulation pendant les étapes de régulation, en positionnant le noyau magnétique mobile en butée dans le fond du logement axial du tube axial borgne.

Selon un mode de réalisation, le clapet de sécurité est relié mécaniquement au noyau magnétique mobile par un tube axial borgne, l'extrémité ouverte du tube axial borgne est solidaire du clapet de sécurité, le corps du tube axial borgne est guidé à coulissement dans le corps de dispositif par des moyens de guidage de tube, le noyau magnétique mobile est engagé à coulissement dans le tube axial borgne.

De préférence, le tube axial borgne est en matériau non magnétique. Cela permet simultanément de réduire son coût de production, et de faciliter le coulissement éventuel du noyau magnétique mobile dans le tube axial borgne.

Les moyens de guidage de tube peuvent avantageusement comprendre une bague en matière plastique à faible coefficient de frottement, solidaire du corps de dispositif, et en contact avec la surface latérale externe du tube axial borgne.

L'extrémité ouverte du tube axial borgne peut avantageusement comprendre une lèvre radiale annulaire sous laquelle est comprimé de façon étanche le clapet de sécurité face à un siège de sécurité. De la sorte, le clapet de sécurité participe à l'étanchéité de la chambre intermédiaire présente entre les deux clapets.

Selon un mode de réalisation avantageux, on prévoit que :
- la bobine d'excitation est disposée sur le corps de dispositif autour de l'axe commun de déplacement,
- le circuit magnétique d'excitation comprend une armature magnétique fixe avec un pôle magnétique proximal et un pôle magnétique distal de part et d'autre de la bobine d'excitation, et comprend un noyau magnétique d'entraînement coulissant axialement dans la bobine d'excitation et entraîné par l'actionneur linéaire, le noyau magnétique d'entraînement ayant une face distale en regard d'une face proximale du noyau magnétique mobile.

Cette disposition réduit sensiblement le volume du circuit magnétique, ainsi que le volume de la bobine d'excitation.

De préférence, le pôle magnétique proximal et/ou le pôle magnétique distal sont constitués chacun d'une portion cylindrique coaxiale de circuit magnétique en prolongement de la bobine d'excitation. Cette disposition permet de réduire encore le diamètre extérieur de la bobine, par le fait que son diamètre intérieur peut être au plus près du noyau magnétique mobile. Les portions cylindriques coaxiales augmentent l'efficacité du circuit magnétique d'excitation, permettent de réduire le volume axial de la bobine tout en assurant une efficacité satisfaisante selon toute la course axiale de l'actionneur linéaire.

Les pôles magnétiques sont de préférence agencés de façon que la face distale du noyau magnétique d'entraînement soit en permanence entre les pôles magnétiques selon toute la course de déplacement de l'actionneur linéaire.

Pour assurer une étanchéité satisfaisante, qui isole de manière certaine tous les organes qui conduisent de l'électricité vis-à-vis du fluide à commander, on prévoit une cloche moteur étanche engagée axialement de façon étanche dans la bobine d'excitation et qui reçoit à coulissement axial le tube axial borgne et le noyau magnétique d'entraînement. L'étanchéité de la cloche peut être assurée par un joint annulaire périphérique.

De préférence, pour améliorer la stabilité de régulation, le clapet de régulation peut être guidé en coulissement axial par des moyens de guidage latéral.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique en coupe d'un dispositif de régulation de fluide à double sécurité selon un mode de réalisation de la présente invention, en position d'obturation, l'actionneur linéaire étant reculé ;
- la figure 2 illustre le dispositif de la figure 1, les clapets étant en position d'obturation, et l'actionneur linéaire étant avancé ;
- la figure 3 illustre le dispositif de la figure 1, après une première étape d'ouverture dans laquelle le clapet de sécurité est ouvert ;
- la figure 4 illustre le dispositif de la figure 1, en phase de régulation ;
- la figure 5 illustre le dispositif de la figure 1, lors d'une fermeture de sécurité par le seul clapet de régulation, le clapet de sécurité étant bloqué en position ouverte ;
- la figure 6 illustre le dispositif de la figure 1, après une fermeture de sécurité par le seul clapet de sécurité, le clapet de régulation restant bloqué en position ouverte ; et
- la figure 7 est une vue de détail du circuit magnétique d'excitation selon un mode de réalisation avantageux de l'invention.

### DESCRIPTION DES MODES DE REALISATION PREFERES

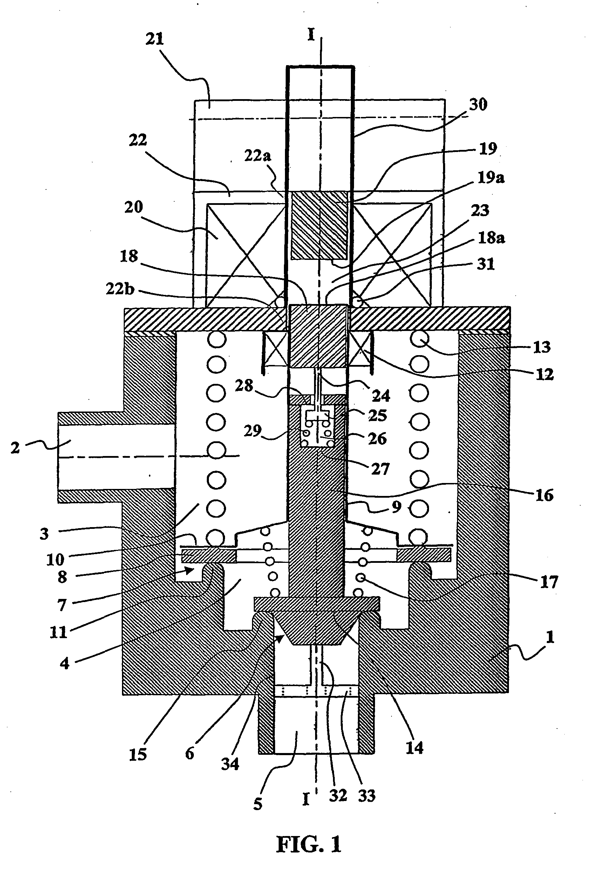

Le dispositif de régulation de fluide à double sécurité tel qu'illustré sur la figure 1 comprend un corps de dispositif 1 dans lequel est prévu un passage de fluide ayant une entrée 2, une chambre amont 3, une chambre intermédiaire 4 et une sortie 5.

Dans un même corps de dispositif 1 sont prévues une vanne de régulation 6 et une vanne de sécurité 7, raccordées en série dans le passage de fluide, et disposées l'une derrière l'autre selon un axe commun I-I.

La vanne de sécurité 7 comprend un clapet de sécurité 8 porté par un axe d'entraînement axial creux sous forme d'un tube axial borgne 9. L'extrémité ouverte du tube axial borgne 9 est solidaire du clapet de sécurité 8. Par exemple, l'extrémité ouverte du tube axial borgne 9 comprend une lèvre radiale annulaire 10 sous laquelle est comprimé de façon étanche le clapet de sécurité 8, face à un siège de sécurité 11, et sous laquelle il est retenu par exemple par sertissage. On peut prévoir notamment que les bords de la lèvre radiale annulaire 10 sont repliés vers l'intérieur et s'engagent dans une fente annulaire radiale externe du clapet de sécurité 8.

Le corps du tube axial borgne 9 est guidé à coulissement dans le corps de dispositif 1 par des moyens de guidage de tube, tels que par exemple une bague 12 en matière plastique à faible coefficient de frottement, solidaire du corps de dispositif 1, et engagée sur la surface périphérique externe du tube axial borgne 9.

Le clapet de sécurité 8 est sollicité par un ressort de fermeture de sécurité 13, qui le repousse vers sa position de fermeture complète telle qu'illustrée sur la figure 1, en appui contre le siège de sécurité 11. Dans cet état, le clapet de sécurité 8 est comprimé entre le siège de sécurité 11 et l'extrémité du tube axial borgne 9, et assure ainsi l'étanchéité entre la chambre amont 3 et la chambre intermédiaire 4.

La vanne de régulation 6 comprend un clapet de régulation 14 qui coopère avec un siège de régulation 15. Le clapet de régulation 14 est relié à un noyau axial 16 engagé à coulissement dans le tube axial borgne 9. Le clapet de régulation 14 est repoussé vers sa position de fermeture illustrée sur la figure 1 par un ressort de régulation 17, par exemple interposé entre le clapet de régulation 14 et le clapet de sécurité 8 ou le tube axial borgne 9.

Un noyau magnétique mobile 18 est engagé à coulissement dans le tube axial borgne 9, et vient généralement se loger dans le fond du tube axial borgne 9 comme illustré sur la figure 1.

Le noyau magnétique mobile 18 coopère fonctionnellement avec un noyau magnétique d'entraînement 19 qui coulisse axialement dans une bobine d'excitation 20 et qui est entraîné en translation axiale par un actionneur linéaire 21. Le noyau magnétique d'entraînement comporte une face distale 19a en regard d'une face proximale 18a du noyau magnétique mobile 18. Un circuit magnétique d'excitation 22 est associé à la bobine d'excitation 20 pour produire une attraction magnétique entre le noyau magnétique mobile 18 et le noyau magnétique d'entraînement 19, tendant à réduire leur entrefer axial mutuel 23 entre leurs faces respectives 19a et 18a.

Le circuit magnétique d'excitation 22 comprend une armature magnétique fixe sur le corps de dispositif 1, et présente un pôle magnétique proximal 22a et un pôle magnétique distal 22b, de part et d'autre de la bobine d'excitation 20, et en regard du passage axial de bobine d'excitation dans lequel coulisse le tube axial borgne 9.

Le circuit magnétique d'excitation 22 ainsi que les noyaux magnétiques 19 et 18 sont constitués d'un matériau ferromagnétique à aimantation temporaire, par exemple un fer doux, de façon à être magnétisés par l'alimentation de la bobine d'excitation 20, et de façon à ne pas conserver de magnétisation rémanente sensible lorsque la bobine d'excitation 20 n'est plus alimentée.

Le tube axial borgne 9 est de préférence en matériau non magnétique, par exemple en acier inoxydable non magnétique.

Le noyau axial 16 est de préférence en matériau non magnétique, par exemple en matière plastique.

Dans le mode de réalisation illustré sur la figure 1, le clapet de régulation 14 est relié mécaniquement au noyau magnétique mobile 18 par une tige axiale 24 solidaire du noyau magnétique mobile 18 et comportant une tête 25 qui coulisse dans un logement axial 26 épaulé du noyau axial 16 lui-même relié au clapet de régulation 14. La tête 25 peut ainsi coulisser axialement dans le logement axial 26 entre le fond du logement 27 et un épaulement 28.

De préférence, la tige axiale 24 et le logement axial 26 sont dimensionnés de façon que, lorsque les clapets de sécurité 8 et de régulation 14 sont fermés comme illustré sur la figure 1, la tête 25 se trouve en une position axiale intermédiaire dans le logement axial 26, laissant un jeu axial entre la tête 25 et l'épaulement 28.

Dans la réalisation illustrée sur la figure 1, un ressort de compression 29 est interposé entre la tête 25 et le fond 27 du logement axial 26, pour repousser la tête 25 à l'écart du clapet de régulation 14. De la sorte, en fonctionnement normal, le ressort de compression 29 maintient le noyau magnétique mobile 18 en butée dans le fond du tube axial borgne 9, pour le rapprocher au plus près du noyau magnétique d'entraînement 19, et pour réduire ainsi l'entrefer axial mutuel 23.

Par le fait que le noyau magnétique mobile 18 est simplement engagé à coulissement dans le fond du tube axial borgne 9, le clapet de sécurité 8 se trouve relié mécaniquement au noyau magnétique mobile 18 par une liaison mécanique unidirectionnelle de sécurité, qui assure l'entraînement positif du clapet de sécurité 8 dans le sens de son ouverture, c'est-à-dire vers le haut sur la figure 1, lorsque le noyau magnétique mobile 18 se déplace vers le haut, tout en laissant au noyau magnétique mobile 18 une faculté de déplacement indépendante du clapet de sécurité 8 dans le sens de sa fermeture : le noyau magnétique mobile 18 peut se déplacer vers le bas même si le clapet de sécurité 8 reste en haut, par le fait que le noyau magnétique mobile 18 peut coulisser librement dans le tube axial borgne 9.

Par ailleurs, du fait de la possibilité de coulissement de la tête 25 dans le logement axial 26, le clapet de régulation 14 se trouve relié mécaniquement au noyau magnétique mobile 18 par une liaison mécanique unidirectionnelle de régulation, qui assure l'entraînement positif du clapet de régulation 14 dans le sens de son ouverture, c'est-à-dire vers le haut sur la figure 1, lorsque le noyau magnétique mobile 18 se déplace vers le haut et la tête 25 vient porter contre l'épaulement 28, tout en laissant au noyau magnétique mobile 18 une faculté de déplacement indépendante du clapet de régulation 14 dans le sens de sa fermeture : si le clapet de régulation 14 reste en position haute, le noyau magnétique mobile 18 peut descendre, la tête 25 coulissant dans le logement axial 26 en comprimant le ressort de compression 29.

De la sorte, un même noyau magnétique mobile 18 peut solliciter, avec une liberté de mouvement axial indépendante, à la fois le clapet de sécurité 8 et le clapet de régulation 14.

Le clapet de régulation 14 et le clapet de sécurité 8 sont agencés sur un axe commun de déplacement I-I, qui est également l'axe commun de la bobine d'excitation 20, du noyau axial 16, du tube axial borgne 9, des noyaux magnétiques 18 et 19, et de l'actionneur linéaire 21. De préférence, les clapets 8 et 14 sont dans le même sens.

Le noyau magnétique mobile 18 constitue, avec le noyau magnétique d'entraînement 19, la bobine d'excitation 20 et le circuit magnétique d'excitation 22, un moyen d'accouplement électromagnétique qui permet d'accoupler sélectivement le noyau magnétique mobile 18 et les clapets 8 et 14 au noyau magnétique d'entraînement 19 et à l'actionneur linéaire 21.

A l'interruption de l'alimentation électrique de la bobine d'excitation 20, le noyau magnétique mobile 18 n'est plus retenu magnétiquement par le noyau magnétique d'entraînement 19, de sorte que l'ensemble constitué par le noyau magnétique mobile 18, le tube axial borgne 9, le noyau axial 16, les clapets 8 et 14, se trouve repoussé vers le bas par l'action du ressort de fermeture de sécurité 13 et du ressort de régulation 17, assurant normalement la fermeture simultanée des deux clapets 8 et 14 pour réaliser une double sécurité. En réalité, les clapets 8 et 14 se ferment chacun indépendamment de l'autre, c'est-à-dire que chaque clapet 8 ou 14 peut se fermer même si l'autre clapet est freiné ou bloqué à l'écart de son siège respectif. On améliore ainsi sensiblement la sécurité à la fermeture.

En position fermée, le clapet de régulation 14 assure l'étanchéité entre la sortie 5 et la chambre intermédiaire 4.

Une cloche moteur 30 étanche est engagée de façon étanche dans la bobine d'excitation 20, et reçoit à coulissement le tube axial borgne 9 et le noyau magnétique d'entraînement 19. L'étanchéité périphérique de la cloche moteur 30 est assurée par exemple par un joint annulaire 31, à la base de la bobine d'excitation 20, pour empêcher la pénétration de fluide provenant de la chambre amont 3 en direction de la bobine d'excitation 20 et de l'actionneur linéaire 21. La cloche moteur 30 peut être constituée d'une mince paroi en matériau non magnétique, de préférence en métal non magnétique, sous forme d'un tube borgne comme illustré sur la figure 1. La partie supérieure de la cloche moteur 30 peut contenir un rotor de moteur constituant l'actionneur linéaire 21, le stator de l'actionneur linéaire 21 étant à l'extérieur de la cloche moteur 30.

Dans la réalisation illustrée sur la figure 1, le clapet de régulation 14 est en outre guidé en coulissement axial le long de l'axe commun de déplacement I-I par des moyens de guidage latéral. Par exemple, les moyens de guidage latéral peuvent comprendre une tige axiale 32 qui relie le clapet de régulation 14 à une bague coulissante 33 et qui coulisse axialement dans un tronçon tubulaire 34 de la sortie 5, en aval du clapet de régulation 14, c'est-à-dire à l'opposé du noyau axial 16.

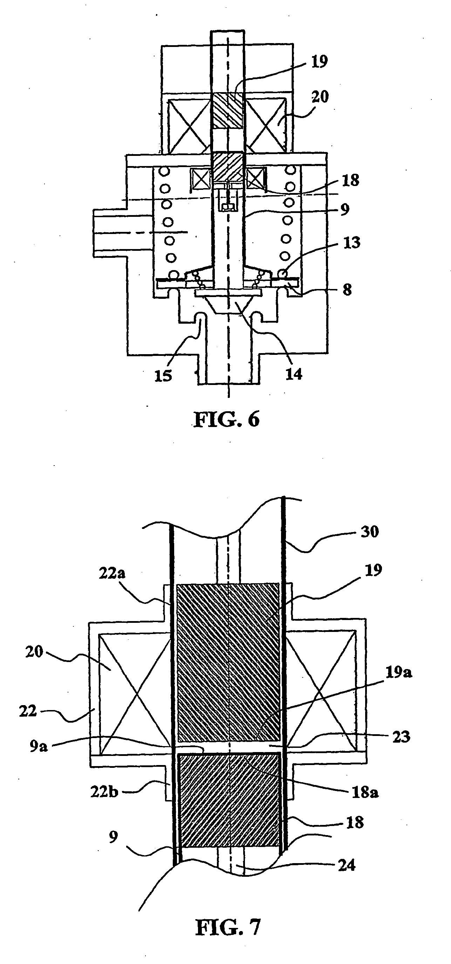

On considère maintenant la figure 7, qui illustre plus en détail un mode de réalisation du circuit magnétique d'excitation 22. On retrouve ainsi le circuit magnétique d'excitation 22 sous forme d'une armature magnétique fixe, avec un pôle magnétique proximal 22a et un pôle magnétique distal 22b, de part et d'autre de la bobine d'excitation 20, contre la face périphérique de la cloche moteur 30.

Le pôle magnétique proximal 22a est constitué d'une portion cylindrique coaxiale de circuit magnétique, en prolongement de la bobine d'excitation 20, c'est-à-dire en direction de l'actionneur linéaire.

De même, le pôle magnétique distal 22b est constitué d'une portion cylindrique coaxiale de circuit magnétique, en prolongement de la bobine d'excitation 20, c'est-à-dire en direction des clapets.

Les pôles magnétiques 22a et 22b sont agencés de façon que la face distale 19a du noyau magnétique d'entraînement 19 soit en permanence entre les pôles magnétiques 22a et 22b selon toute la course de déplacement de l'actionneur linéaire 21. De même, la longueur du tube axial borgne 9 est telle que son fond 9a soit en permanence entre les pôles magnétiques 22a et 22b selon toute la course de déplacement du clapet de sécurité 8.

En fonctionnement normal, lorsque les deux noyaux magnétiques 18 et 19 sont magnétiquement collés, l'entrefer axial mutuel 23 est limité à la seule épaisseur du fond 9a du tube axial borgne 9. L'entrefer latéral distal entre le pôle magnétique distal 22b et le noyau magnétique mobile 18 est limité, égal à l'épaisseur de la paroi de cloche moteur 30 augmentée de l'épaisseur de la paroi latérale du tube axial borgne 9 et des jeux fonctionnels autour du noyau magnétique mobile 18 et autour du tube axial borgne 9. L'entrefer latéral proximal entre le pôle magnétique proximal 22a et le noyau magnétique d'entraînement 19 peut être encore plus faible que l'entrefer latéral distal. II est donc possible d'assurer un collage magnétique fort entre les noyaux magnétiques 18 et 19 à l'aide d'une bobine d'excitation de taille relativement petite.

On considère maintenant les figures 1 à 6 qui illustrent diverses étapes du fonctionnement du dispositif selon l'invention.

On rappelle que, sur la figure 1, le dispositif est à l'état d'obturation totale, les clapets 8 et 14 étant maintenus fermés respectivement par le ressort de sécurité 13 et le ressort de régulation 17. L'actionneur linéaire 21 est en position indifférente, représenté par exemple en position de recul, c'est-à-dire avec le noyau magnétique d'entraînement 19 relevé, et avec un entrefer axial mutuel 23 de grande épaisseur.

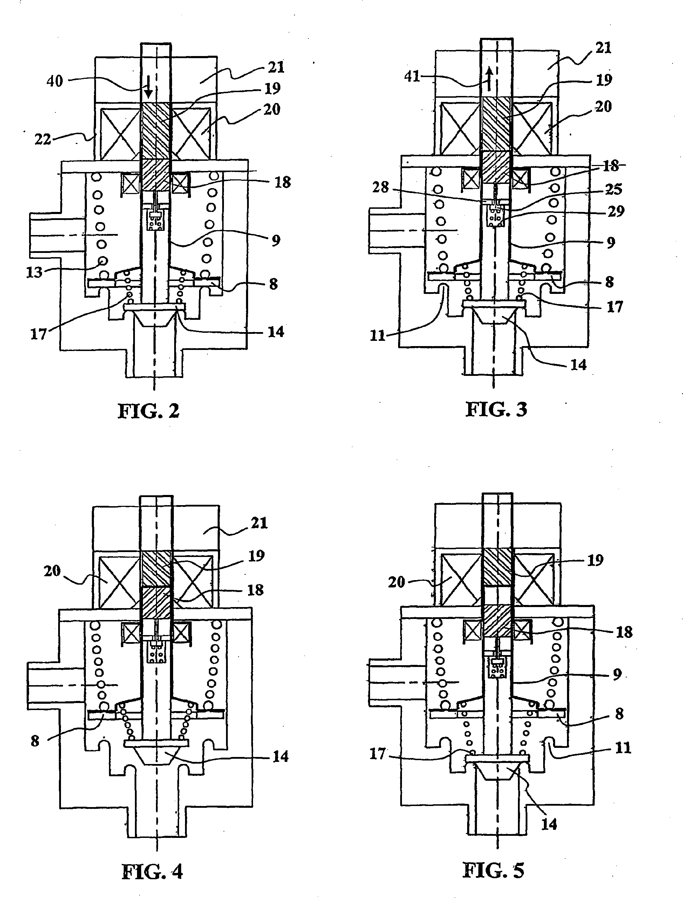

Pour faire fonctionner le dispositif en régulation, et donc pour ouvrir les clapets 8 et 14, on active tout d'abord l'actionneur linéaire 21 pour déplacer le noyau magnétique d'entraînement 19 vers le bas (flèche 40) pour le rapprocher du noyau magnétique mobile 18, comme illustré sur la figure 2, jusqu'à atteindre un faible entrefer axial mutuel. L'alimentation de la bobine d'excitation 20 provoque alors le collage magnétique des noyaux magnétiques 18 et 19 l'un avec l'autre, sous l'action du champ magnétique créé par la bobine d'excitation 20 et se développant dans le circuit magnétique d'excitation 22.

Sur la figure 3, on peut ensuite déplacer vers le haut (flèche 41) le noyau magnétique d'entraînement 19 par actionnement de l'actionneur linéaire 21, les noyaux magnétiques 18 et 19 restant collés magnétiquement l'un à l'autre.

Au cours d'une première étape, le noyau magnétique mobile 18 soulève le tube axial borgne 9 et le clapet de sécurité 8, provoquant l'ouverture du clapet de sécurité 8 à l'écart du siège de sécurité 11, alors que le clapet de régulation 14 reste fermé par l'action du ressort de régulation 17 et du ressort de compression 29, jusqu'à ce que la tête 25 vienne en appui contre l'épaulement 28.

Ensuite, sur la figure 4, le dispositif est en phase de régulation, les clapets 8 et 14 étant ouverts et solidaires du noyau magnétique d'entraînement 19 sollicité par l'actionneur linéaire 21, pour prendre toute position désirée de régulation du fluide.

La figure 5 illustre un fonctionnement de sécurité dans l'hypothèse où le clapet de sécurité 8 est resté bloqué en position ouverte à l'écart du siège de sécurité 11, par exemple par un corps étranger engagé entre le clapet de sécurité 8 et le siège de sécurité 11 : la bobine d'excitation n'est plus alimentée, de sorte que le dispositif doit prendre un état fermé pour assurer la sécurité. Du fait de l'absence d'alimentation de la bobine d'excitation 20, le noyau magnétique mobile 18 n'est plus retenu magnétiquement par le noyau magnétique d'entraînement 19, et se trouve tiré vers le bas avec le clapet de régulation 14 par le ressort de régulation 17, qui provoque la fermeture du clapet de régulation 14, même si le clapet de sécurité 8 reste en position ouverte. Ce mouvement est rendu possible par le coulissement du noyau magnétique mobile 18 dans le tube axial borgne 9.

Sur la figure 6, on a illustré un fonctionnement de fermeture de sécurité dans l'hypothèse où le clapet de régulation 14 reste bloqué en position ouverte à l'écart du siège de régulation 15 par exemple à cause de la présence d'un corps étranger entre le clapet de régulation 14 et le siège de régulation 15.

Lorsque la bobine d'excitation 20 n'est plus alimentée, le noyau magnétique mobile 18 n'est plus retenu par le noyau magnétique d'entraînement 19, et se trouve attiré vers le bas avec le tube axial borgne 9 par le ressort de fermeture de sécurité 13. On assure ainsi la fermeture du clapet de sécurité 8 même si le clapet de régulation 14 reste ouvert.

La présente invention n'est pas limitée aux modes de réalisation qui ont été explicitement décrits, mais elle en inclut les diverses variantes et généralisations contenues dans le domaine des revendications ci-après.

## Revendications

1. - Dispositif de régulation de fluide à double sécurité, comprenant une vanne de régulation (6) et une vanne de sécurité (7) raccordées en série dans un passage de fluide et logées dans un même corps de dispositif (1), la vanne de sécurité (7) ayant une bobine d'excitation (20) qui sollicite, par un circuit magnétique d'excitation (22, 19), un noyau magnétique de sécurité mobile (18) relié mécaniquement à un clapet de sécurité (8), l'activation de la bobine d'excitation (20) permettant la pleine ouverture du clapet de sécurit (8), la désactivation de la bobine d'excitation (20) provoquant le retour du clapet de sécurité (8) à l'état de fermeture complète sous l'action d'un ressort de fermeture de sécurité (13), la vanne de régulation (6) ayant un clapet de régulation (14) sollicité par un ressort de régulation (17) vers sa position de fermeture complète et relié par l'intermédiaire d'un moyen d'accouplement électromagnétique (20, 22, 19, 18) à un actionneur linéaire (21) apte à régler sa position de façon continue selon une course linéaire entre une pleine ouverture et une fermeture complète, le moyen d'accouplement électromagnétique comprenant ladite bobine d'excitation (20) qui sollicite, lorsqu'elle est activée, par ledit circuit magnétique d'excitation (22, 19) relié à l'actionneur linéaire (21), un noyau magnétique d'accouplement mobile (18) relié au clapet de régulation (14), ladite bobine d'excitation (20) et ledit circuit magnétique d'excitation (22) participant simultanément à l'actionnement du clapet de sécurité (8) et à l'accouplement du clapet de régulation (14) à l'actionneur linéaire (21), **caractérisé en ce que** :
- le noyau magnétique de sécurité mobile et le noyau magnétique d'accouplement mobile sont un seul et même noyau magnétique mobile (18),
- le clapet de régulation (14) et le clapet de sécurité (8) sont agencés sur un axe commun de déplacement (I-I),
- le clapet de sécurité (8) est relié mécaniquement au noyau magnétique mobile (18) par une liaison mécanique unidirectionnelle de sécurité (9), assurant l'entraînement positif du clapet de sécurité (8) dans le sens de son ouverture, tout en laissant au noyau magnétique mobile (18) une faculté de déplacement indépendante du clapet de sécurité (8) dans le sens de sa fermeture,
- le clapet de régulation (14) est relié mécaniquement au noyau magnétique mobile (18) par une liaison mécanique unidirectionnelle de régulation (16, 24, 25, 26), assurant l'entraînement positif du clapet de régulation (14) dans le sens de son ouverture, tout en laissant au noyau magnétique mobile (18) une faculté de déplacement indépendante du clapet de régulation (14) dans le sens de sa fermeture.

2. - Dispositif selon la revendication 1, **caractérisé en ce que** le ressort de fermeture de sécurité (13) est interposé entre le corps de dispositif (1) et le clapet de sécurité (8).

3. - Dispositif selon l'une des revendications 1 ou 2, **caractérisé en ce que** le ressort de régulation (17) est interposé entre le clapet de sécurité (8) et le clapet de régulation (14).

4. - Dispositif selon l'une quelconque des revendications 1 à 3, **caractérisé en ce que** le clapet de régulation (14) est relié mécaniquement au noyau magnétique mobile (18) par une tige axiale (24) solidaire du noyau magnétique mobile (18) et comportant une tête (25) qui coulisse dans un logement axial (26) épaulé d'un noyau axial (16) relié au clapet de régulation (14), la tête (25) pouvant coulisser axialement dans le logement axial (26) entre son fond (27) et l'épaulement (28).

5. - Dispositif selon la revendication 4, **caractérisé en ce que** la tige axiale (24) et le logement axial (26) sont dimensionnés de façon que, lorsque les clapets de sécurité (8) et de régulation (14) sont fermés, la tête (25) se trouve en une position axiale intermédiaire dans le logement axial (26), de sorte que le clapet de sécurité (8) s'ouvre avant le clapet de régulation (14).

6. - Dispositif selon l'une des revendications 4 ou 5, **caractérisé en ce qu'**un ressort de compression (29) est interposé entre la tête (25) et le fond (27) du logement axial (26), pour repousser la tête (25) et le noyau magnétique mobile (18) à l'écart du clapet de régulation (14).

7. - Dispositif selon l'une quelconque des revendications 1 à 6, **caractérisé en ce que** le clapet de sécurité (8) est relié mécaniquement au noyau magnétique mobile (18) par un tube axial borgne (9), l'extrémité ouverte du tube axial borgne (9) est solidaire du clapet de sécurité (8), le corps du tube axial borgne (9) est guidé à coulissement dans le corps de dispositif (1) par des moyens de guidage de tube (12), le noyau magnétique mobile (18) est engagé à coulissement dans le tube axial borgne (9).

8. - Dispositif selon la revendication 7, **caractérisé en ce que** le tube axial borgne (9) est en matériau non magnétique.

9. - Dispositif selon l'une des revendications 7 ou 8, **caractérisé en ce que** les moyens de guidage de tube comprennent une bague (12) en matière plastique à faible coefficient de frottement, solidaire du corps de dispositif (1), et en contact avec la surface latérale externe du tube axial borgne.

10. - Dispositif selon l'une quelconque des revendications 7 à 9, **caractérisé en ce que** l'extrémité ouverte du tube axial borgne (9) comprend une lèvre radiale annulaire (10) sous laquelle est comprimé de façon étanche le clapet de sécurité (8) face à un siège de sécurité (11).

11. - Dispositif selon l'une quelconque des revendications 7 à 10, **caractérisé en ce que** :
- la bobine d'excitation (20) est disposée sur le corps de dispositif (1) autour de l'axe commun de déplacement (I-I),
- le circuit magnétique d'excitation comprend une armature magnétique fixe (22) avec un pôle magnétique proximal (22a) et un pôle magnétique distal (22b) de part et d'autre de la bobine d'excitation (20), et comprend un noyau magnétique d'entraînement (19) coulissant axialement dans la bobine d'excitation (20) et entraîné par l'actionneur linéaire (21), le noyau magnétique d'entraînement (19) ayant une face distale (19a) en regard d'une face proximale (18a) du noyau magnétique mobile (18).

12. - Dispositif selon la revendication 11, **caractérisé en ce que** le pôle magnétique proximal (22a) et/ou le pôle magnétique distal (22b) sont constitués chacun d'une portion cylindrique coaxiale de circuit magnétique en prolongement de la bobine d'excitation (20).

13. - Dispositif selon l'une des revendications 11 ou 12, **caractérisé en ce que** les pôles magnétiques (22a, 22b) sont agencés de façon que la face distale (19a) du noyau magnétique d'entraînement (19) soit en permanence entre les pôles magnétiques (22a, 22b) selon toute la course de déplacement de l'actionneur linéaire (21).

14. - Dispositif selon l'une quelconque des revendications 11 à 13, **caractérisé en ce qu'**une cloche moteur (30) étanche est engagée axialement de façon étanche dans la bobine d'excitation (20) et reçoit à coulissement axial le tube axial borgne (9) et le noyau magnétique d'entraînement (19).

15. - Dispositif selon l'une quelconque des revendications 1 à 14, **caractérisé en ce que** le clapet de régulation (14) est guidé en coulissement axial par des moyens de guidage latéral (32-34).

## Claims

1. Double-safety fluid regulating device, comprising a regulating valve (6) and a safety valve (7) connected in series in a fluid passage and housed in a common device body (1), the safety valve (7) including an excitation coil (20) which, via an excitation magnetic circuit (22, 19), biases a mobile safety magnetic core (18) mechanically connected to a safety shutter (8), activation of the excitation coil (20) fully opening the safety shutter (8), deactivation of the excitation coil (20) causing the safety shutter (8) to be returned to the fully closed state under the action of a safety closure spring (13), the regulating valve (6) including a regulating shutter (14) biased by a regulating spring (17) toward its fully closed position and connected via electromagnetic coupling means (20, 22, 19, 18) to a linear actuator (21) adapted to adjust its position continuously along a linear stroke between a fully open position and a fully closed position, the electromagnetic coupling means including said excitation coil (20) which, when it is activated, via said excitation magnetic circuit (22, 19) connected to the linear actuator (21), biases a mobile coupling magnetic core (18) connected to the regulating shutter (14), said excitation coil (20) and said excitation magnetic circuit (22) participating simultaneously in the actuation of the safety shutter (8) and in the coupling of the regulating shutter (14) to the linear actuator (21), **characterized in that**:
- the mobile safety magnetic core and the mobile coupling magnetic core are one and the same mobile magnetic core (18),
- the regulating shutter (14) and the safety shutter (8) are arranged on a common displacement axis (I-I),
- the safety shutter (8) is mechanically connected to the mobile magnetic core (18) by a safety unidirectional mechanical connection (9), ensuring positive driving of the safety shutter (8) in the direction that opens it, whilst allowing the mobile magnetic core (18) to move independently of the safety shutter (8) in the direction that closes it,
- the regulating shutter (14) is mechanically connected to the mobile magnetic core (18) by a regulating unidirectional mechanical connection (16, 24, 25, 26), ensuring positive driving of the regulation shutter (14) in the direction that opens it, whilst allowing the mobile magnetic core (18) to move independently of the regulating shutter (14) in the direction that closes it.

2. Device according to claim 1, **characterized in that** the safety closure spring (13) is disposed between the device body (1) and the safety shutter (8).

3. Device according to either claim 1 or claim 2, **characterized in that** the regulating spring (17) is disposed between the safety shutter (8) and the regulating shutter (14).

4. Device according to any one of claims 1 to 3, **characterized in that** the regulating shutter (14) is mechanically connected to the mobile magnetic core (18) by an axial stem (24) fastened to the mobile magnetic core (18) and including a head (25) that slides in a shouldered axial housing (26) of an axial core (16) connected to the regulating shutter (14), the head (25) being able to slide axially in the axial housing (26) between its blind end (27) and the shoulder (28).

5. Device according to claim 4, **characterized in that** the axial stem (24) and the axial housing (26) have dimensions such that, when the safety shutter (8) and the regulating shutter (14) are closed, the head (25) is in an intermediate axial position in the axial housing (26), so that the safety shutter (8) is opened before the regulating shutter (14).

6. Device according to either claim 4 or claim 5, **characterized in that** a compression spring (29) is disposed between the head (25) and the blind end (27) of the axial housing (26) to push the head (25) and the mobile magnetic core (18) away from the regulating shutter (14).

7. Device according to any one of claims 1 to 6, **characterized in that** the safety shutter (8) is mechanically connected to the mobile magnetic core (18) by a blind axial tube (9), the open end of the blind axial tube (9) is fastened to the safety shutter (8), the body of the blind axial tube (9) is guided in the device body (1), in which it slides, by tube guide means (12), the mobile magnetic core (18) is engaged in the blind axial tube (9), in which it slides.

8. Device according to claim 7, **characterized in that** the blind axial tube (9) is of non-magnetic material.

9. Device according to either claim 7 or claim 8, **characterized in that** the tube guide means comprise a plastic material ring (12) with a low coefficient of friction fastened to the device body (1) and in contact with the external lateral surface of the blind axial tube.

10. Device according to any one of claims 7 to 9, **characterized in that** the open end of the blind axial tube (9) comprises an annular radial lip (10) under which the safety shutter (8) is compressed in fluid-tight manner facing a safety seat (11).

11. Device according to any one of claims 7 to 10, **characterized in that**:
- the excitation coil (20) is disposed on the device body (1) around the common displacement axis (I-I),
- the excitation magnetic circuit comprises a fixed magnetic armature (22) with a proximal magnetic pole (22a) and a distal magnetic pole (22b) on respective opposite sides of the excitation coil (20), and comprises a driving magnetic core (19) sliding axially in the excitation coil (20) and driven by the linear actuator (21), the driving magnetic core (19) having a distal face (19a) facing a proximal face (18a) of the mobile magnetic core (18).

12. Device according to claim 11, **characterized in that** the proximal magnetic pole (22a) and/or the distal magnetic pole (22b) each consists of a magnetic circuit coaxial cylindrical portion extending the excitation coil (20).

13. Device according to either claim 11 or claim 12, **characterized in that** the magnetic poles (22a, 22b) are arranged so that the distal face (19a) of the driving magnetic core (19) is at all times between the magnetic poles (22a, 22b) over the whole of the displacement stroke of the linear actuator (21).

14. Device according to any one of claims 11 to 13, **characterized in that** a fluid-tight driving bell (30) is axially engaged in fluid-tight manner in the excitation coil (20) and receives the blind axial tube (9) and the driving magnetic core (19) which slide axially in it.

15. Device according to any one of claims 1 to 14, **characterized in that** axial sliding of the regulating shutter (14) is guided by lateral guide means (32-34).

## Patentansprüche

1. Vorrichtung zur Regelung eines Fluids mit zweifacher Sicherheit, mit einem Regelventil (6) und einem Sicherheitsventil (7), die in Reihe in einer Fluidpassage angeordnet sind und in demselben Körper der Vorrichtung (1) untergebracht sind, wobei das Sicherheitsventil (7) eine Erregerspule (20) aufweist, die durch einen magnetischen Erregerkreis (22, 19) einen beweglichen Sicherheitsmagnetkern (18), der mechanisch mit einem Sicherheitsverschlussteil (8) verbunden ist, anregt, wobei die Aktivierung der Erregerspule (20) eine vollständige Öffnung des Sicherheitsverschlussteiles (8) gestattet, während eine Deaktivierung der Erregerspule (20) eine Rückkehr des Sicherheitsverschlussteiles (8) in den Zustand vollständigen Schließens unter Wirkung einer Sicherheitsschließfeder (13) bewirkt, wobei das Regelventil (6) einen Regelverschlussteil (14) aufweist, der durch eine Regelfeder (17) in Richtung seiner vollständigen Schließstellung beaufschlagt ist und über ein elektromagnetisches Kopplungsmittel (20, 22, 19, 18) mit einem Linear-Betätigungsorgan (21) verbunden ist, das geeignet ist, seine Position in kontinuierlicher Weise längs eines geradlinigen Weges zwischen einer vollständigen Öffnung und einer kompletten Schließung zu regeln, wobei das elektromagnetische Kopplungsmittel die genannte Erregerspule (20) enthält, die, wenn sie aktiviert ist, durch den genannten magnetischen Erregerkreis (22, 19), der mit dem Linear-Betätigungsorgan (21) verbunden ist, einen beweglichen magnetischen Kopplungskern (18) beaufschlagt, der mit dem Regelverschlussteil (14) verbunden ist, wobei die genannte Erregerspule (20) und der genannte Erregerkreis (22) gleichzeitig an der Betätigung des Sicherheitsverschlussteiles (8) teilnehmen und an der Kopplung des Regelverschlussteiles (14) mit dem Linear-Betätigungsorgan (21), **dadurch gekennzeichnet, daß**:
- der bewegliche Sicherheitsmagnetkern und der bewegliche Kopplungsmagnetkern ein und derselbe bewegliche Magnetkern (18) sind,
- der Regelverschlussteil (14) und der Sicherheitsverschlussteil (8) auf einer gemeinsamen Verschiebungsachse (I-I) angeordnet sind,
- der Sicherheitsverschlussteil (8) mechanisch mit dem beweglichen Magnetkern (18) mittels einer mechanischen, in einer Richtung wirkenden Sicherheitsverbindung (9) verbunden ist, die einen positiven Antrieb des Sicherheitsverschlussteiles (8) im Sinne dessen Öffnung sicherstellt, wobei sie gleichzeitig dem beweglichen Magnetkern (18) die Möglichkeit zur unabhängigen Verschiebung des Sicherheitsverschlussteiles (8) im Sinne dessen Schließung läßt,
- der Regelverschlussteil (14) mechanisch mit dem beweglichen Magnetkern (18) mittels einer in einer Richtung wirkenden Regelverbindung (16, 24, 25, 26) verbunden ist, die einen positiven Antrieb des Regelverschlussteiles (14) im Sinne dessen Öffnung sicherstellt und gleichzeitig dem beweglichen Magnetkern (18) eine Möglichkeit zur unabhängigen Verschiebung des Regelverschlussteiles (14) im Sinne dessen Schließung läßt.

2. Vorrichtung nach Anspruch 1, **dadurch gekennzeichnet, daß** die Sicherheitsschließfeder (13) zwischen den Körper der Vorrichtung (1) und den Sicherheitsverschlussteil (8) eingesetzt ist.

3. Vorrichtung nach einem der Ansprüche 1 oder 2, **dadurch gekennzeichnet, daß** die Regelfeder (17) zwischen den Sicherheitsverschlussteil (8) und den Regelverschlussteil (14) eingesetzt ist.

4. Vorrichtung nach irgendeinem der Ansprüche 1 bis 3, **dadurch gekennzeichnet, daß** der Regelverschlussteil (14) mechanisch mit dem beweglichen Magnetkern (18) mittels einer axialen Stange (24) verbunden ist, die mit dem beweglichen Magnetkern (18) zusammenhängt und einen Kopf (25) trägt, der in einem axialen Raum (26) gleitet, der durch einen axialen Kern (16) begrenzt ist, der mit dem Regelverschlussteil (14) verbunden ist, wobei der Kopf (25) axial in dem axialen Raum (26) zwischen dessen Boden (27) und dem Anschlag (28) gleiten kann.

5. Vorrichtung nach Anspruch 4, **dadurch gekennzeichnet, daß** die axiale Stange (24) und der axiale Raum (26) so dimensioniert sind, daß, wenn der Sicherheitsverschlussteil (8) und der Regelverschlussteil (14) geschlossen sind, sich der Kopf (25) in einer axialen Position zwischen dem axialen Raum (26) befindet, derart, daß sich der Sicherheitsverschlussteil (8) vor dem Regelverschlussteil (14) öffnet.

6. Vorrichtung nach einem der Ansprüche 4 oder 5, **dadurch gekennzeichnet, daß** eine Kompressionsfeder (29) zwischen den Kopf (25) und den Boden (27) des axialen Raumes (26) eingesetzt ist, um den Kopf (25) und dem beweglichen Magnetkern (18) in Richtung zum Regelverschlussteil (14) zu stoßen.

7. Vorrichtung nach irgendeinem der Ansprüche 1 bis 6, **dadurch gekennzeichnet, daß** der Sicherheitsverschlussteil (8) mechanisch mit dem beweglichen Magnetkern (18) mittels eines axialen Blindrohres (9) verbunden ist, wobei das offene Ende des axialen Blindrohres (9) mit dem Sicherheitsverschlussteil (8) zusammenhängend ist, wobei der Körper des axialen Blindrohres (9) gleitend in dem Körper der Vorrichtung (1) mittels einer Führungshülse (12) gleitend geführt ist, wobei der bewegliche Magnetkörper (18) in dem axialen Blindrohr (9) gleitend in Eingriff steht.

8. Vorrichtung nach Anspruch 7, **dadurch gekennzeichnet, daß** das axiale Blindrohr (9) aus nicht-magnetischen Materialien ist.

9. Vorrichtung nach einem der Ansprüche 7 oder 8, **dadurch gekennzeichnet, daß** die Mittel zur Führung des Rohres einen Ring (12) aus Kunststoffmaterial mit geringem Reibungskoeffizienten aufweisen, der mit dem Körper der Vorrichtung (1) zusammenhaltend ausgebildet ist und der mit der äußeren Seitenfläche des axialen Blindrohres in Kontakt steht.

10. Vorrichtung nach irgendeinem der Ansprüche 7 bis 9, **dadurch gekennzeichnet, daß** das offene Ende des axialen Blindrohres (9) eine radiale ringförmige Lippe (10) enthält, unter der der Sicherheitsverschlussteil (8) gegenüberliegend zu einem Sicherheitssitz (11) in dichtender Weise komprimiert ist.

11. Vorrichtung nach irgendeinem der Ansprüche 7 bis 10, **dadurch gekennzeichnet, daß**:
- die Erregerspule (20) rings um eine gemeinsame Verschiebungsachse (I-I) des Körpers der Vorrichtung (1) angeordnet ist,
- der magnetische Erregerkreis einen festen magnetischen Teil (22) mit einem proximalen Magnetpol (22a) und einem distalen Magnetpol (22b) auf beiden Seiten der Erregerspule (20) hat und einen magnetischen Antriebskern (19) enthält, der axial in der Erregerspule (20) gleitet und durch das Linear-Betätigungsorgan (21) angetrieben ist, wobei der magnetische Antriebskern (19) eine distale Fläche (19a) in Bezug zu einer proximalen Fläche (18a) des beweglichen Magnetkernes (18) hat.

12. Vorrichtung nach Anspruch 11, **dadurch gekennzeichnet, daß** der proximale Magnetpol (22a) und/oder der distale Magnetpol (22b) jeweils durch einen zylindrischen koaxialen Teil des Magnetkreises in Verlängerung der Erregerspule (20) gebildet sind.

13. Vorrichtung nach einem der Ansprüche 11 oder 12, **dadurch gekennzeichnet, daß** die Magnetpole (22a, 22b) derart angeordnet sind, daß die distale Fläche (19a) des magnetischen Antriebskernes (19) permanent zwischen den Magnetpolen (22a, 22b) längs des gesamten Verschiebeweges des Linear-Betätigungsorgans (21) ist.

14. Vorrichtung nach irgendeinem der Ansprüche 11 bis 13, **dadurch gekennzeichnet, daß** ein dichter Glockenmotor (30) axial in dichtender Weise mit der Erregerspule (20) in Eingriff steht und das axiale Blindrohr (9) und den magnetischen Antriebskern (19) für ein axiales Gleiten aufnimmt.

15. Vorrichtung nach irgendeinem der Ansprüche 1 bis 14, **dadurch gekennzeichnet, daß** der Regelverschlussteil (14) für ein axiales Gleiten durch seitliche Führungsmittel (32-34) geführt ist.
